# EUROPÄISCHE PATENTSCHRIFT

(11) **EP 3 187 078 B1**
(45) Veröffentlichungstag und Bekanntmachung des Hinweises auf die Patenterteilung: **15.09.2021**
(21) Anmeldenummer: 16150078.0
(22) Anmeldetag: 04.01.2016
(51) Int. Cl.: A47J 43/07

(54) **VORRICHTUNG ZUM MISCHEN UND/ODER PÜRIEREN VON SPEISEN UND VERFAHREN ZUM KONTROLLIEREN DIESER VORRICHTUNG**
DEVICE FOR MIXING AND/OR PURÉEING FOOD AND METHOD FOR CONTROLLING THIS DEVICE
DISPOSITIF DESTINÉ À MÉLANGER ET/OU À RÉDUIRE EN PURÉE DES REPAS ET SON PROCÉDÉ DE CONTRÔLE

(43) Veröffentlichungstag der Anmeldung: 05.07.2017
(73) Patentinhaber: Novis AG, 1840 Luxemburg (LU); Techtronic Floor Care Technology Limited, Tortola (VG)
(72) Erfinder: STEINER, Wolfgang, 2572 Mörigen (CH); LOEBIG, Jeffrey Carl, Kwai Chung (HK); CHAN CHI YAN, Felix, Dongguan City, Guangdong (CN); CHOW WING HUNG, Kevin, Dongguan City, Guangdong (CN); ZHOU JIE GUANG, Jiemy, Dongguan City, Guangdong (CN)
(74) Vertreter: BOVARD AG

(56) Entgegenhaltungen:
- EP-A1- 0 120 496
- EP-A1- 2 505 063
- DE-A1- 3 540 370

## Beschreibung

### Technisches Gebiet der Erfindung

Die vorliegende Erfindung bezieht sich auf das technische Gebiet der Küchengeräte. Spezifisch bezieht sich die vorliegende Erfindung auf einen so genannten Standmixer, also auf eine Vorrichtung zum Mischen und/oder Pürieren von Speisen, beispielsweise Früchten und Gemüse, welche selbststehend auf einer Arbeitsfläche verwendet werden kann. Ausserdem bezieht sich die vorliegende Erfindung auf ein Verfahren zum Kontrollieren dieser Vorrichtung.

### Stand der Technik

Standfeste Küchengeräte, welche zum Mischen und/oder zum Pürieren von Speisen verwendet werden, werden üblicherweise Standmixer oder (in Anlehnung auf den englischen Begriff) Blender genannt. Solche Vorrichtungen existieren schon seit längerer Zeit und finden heute eine breite Verwendung im Haushalt und im professionellen Bereich (z.B. in Saftbars o.ä.). Insbesondere seit einiger Zeit erfreuen sich frischzubereitete Frucht- und Gemüsesäfte bzw. Smoothies einer grossen Popularität, was die Nachfrage nach Standmixer entsprechend erhöht.

Ein Standmixer besteht typischerweise aus einer Basis, in welcher ein Elektromotor untergebracht ist. Auf diese Basis wird ein Behälter für die zu mischenden bzw. pürierenden Zutaten aufgesetzt. Am Boden des Behälters befindet sich ein so genannter Messerstern, welcher über eine passende Verbindung mit dem Elektromotor verbunden ist, so dass dieser in schnelle Rotation versetzt werden kann. Die Rotation des Messersterns führt zum Mischen bzw. zum Pürieren der Speisen im Behälter.

Um ein Herausspringen bzw. -spritzen der Speisen während des Betriebs des Standmixers zu vermeiden, wird der Behälter generell durch einen Deckel abgeschlossen. Dieser Deckel kann vollkommen abnehmbar oder über eine Scharnierverbindung am oberen Rand des Behälters befestigt sein.

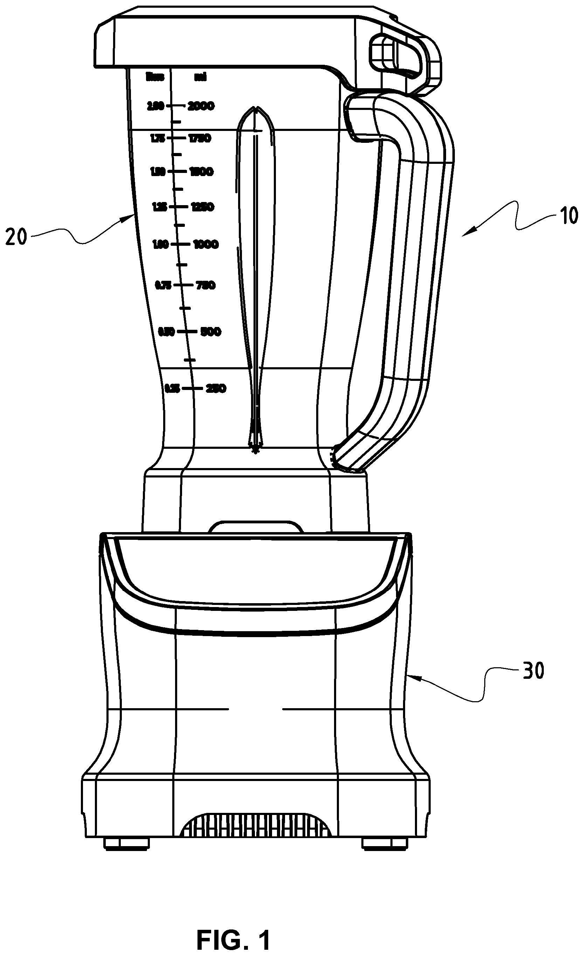

Der in Figur 1 dargestellte erfindungsgemässe Standmixer hat ebenfalls diese grundsätzliche Struktur. Diverse Patentschriften (z.B. US 3 368 800) zeigen ebenfalls solche Standmixer.

Damit eine gute (und auch schnelle) Zerkleinerung der Speisen in einem Standmixer erreicht werden kann, wird der Messerstern typischerweise auf sehr hohe Geschwindigkeiten gebracht. Bei "langsameren" Standmixer werden so Drehzahlen von etwa 12'000 Umdrehungen pro Minute erreicht, während bei leistungsfähigeren Standmixern (vor allem im Gastronomie-Bereich) auch Geschwindigkeiten von knapp 40'000 Umdrehungen pro Minute möglich sind.

Solche Geschwindigkeiten der Messer bergen jedoch die Gefahr der ernsthaften Verletzungen, falls ein Benutzer mit der Hand ins Innere des Behälters hineinreichen und so in den rotierenden Messerstern greifen kann. Die Verletzungsgefahr ist speziell bei Kindern sehr gross, da sie sich oft der Gefahr gar nicht bewusst sind und den Standmixer für ein Spielzeug halten könnten.

Bekannte Lösungen zur Verringerung dieser Verletzungsgefahr basieren im Wesentlichen auf mechanischen Sicherheitselementen (z.B. mit einer mechanischen Verriegelung des Deckels). Allerdings sind diese Lösungen oft kompliziert oder nicht zuverlässig, so dass die Verletzungsgefahr trotzdem besteht.

### Offenbarung der Erfindung

Es ist daher eine Aufgabe der vorliegenden Erfindung eine Vorrichtung zum Mischen und/oder Pürieren von Speisen vorzuschlagen, mit einem Sicherheitssystem, welches im Vergleich zu den Sicherheitssystemen in bisher bekannten Standmixern eine erhöhte Zuversichtlichkeit und einen einfacheren Aufbau aufweist, und welches zudem günstiger hergestellt und instand gesetzt werden kann. Zudem soll ein Verfahren zum Kontrollieren einer solchen Vorrichtung zum Mischen und/oder Pürieren von Speisen bereitgestellt werden, dank welchem die Verletzungsgefahr bei der Verwendung dieser Vorrichtung verringert werden kann.

Diese Aufgaben werden von der Erfindung insbesondere durch eine Vorrichtung gemäss dem unabhängigen Patentanspruch 1 und ein Verfahren gemäss dem unabhängigen Patentanspruch 7 gelöst. Vorteilhafte Ausgestaltungen und weitere Ausführungsbeispiele sind in den abhängigen Ansprüchen beschrieben.

Insbesondere werden diese Aufgaben gelöst durch eine Vorrichtung zum Mischen und/oder Pürieren von Speisen umfassend einen Behälter für die zu mischenden und/oder pürierenden Speisen mit einem Deckel, sowie eine Basis, welche einen Antriebsmotor umfasst, und auf welche der Behälter aufsetzbar ist, in welcher der Deckel einen Permanent-Magneten und der Behälter eine Blattfeder umfassen, wobei die Blattfeder durch den Permanent-Magneten derart anziehbar ist, dass ein im Behälter integrierter Stromkreis schliessbar ist, und in welcher der Behälter ein Identifikationselement mit darauf speicherbaren Daten und die Basis ein Lese- und Kontrollmodul umfassen, wobei das Identifikationselement über den Stromkreis aktivierbar ist, und wobei die auf dem Identifikationselement speicherbaren Daten durch das Lese- und Kontrollmodul lesbar und der Antriebsmotor kontrollierbar sind.

Dank einer solchen Struktur der erfindungsgemässen Vorrichtung zum Mischen und/oder Pürieren von Speisen kann gewährleistet werden, dass eine Kontrolle des Antriebsmotors der Vorrichtung davon abhängig gemacht wird, ob der Deckel auf dem Behälter und der Behälter auf der Basis korrekt aufgesetzt sind. Somit kann die Sicherheit beim Betrieb der erfindungsgemässen Vorrichtung stark erhöht werden. Permanent-Magnete zeichnen sich ausserdem durch eine grosse Robustheit und niedrigen Preis aus. Zudem können sie relativ einfach in die Deckel aus Metall oder Kunststoff eingesetzt und dort festgehalten werden. In Kombination mit einer metallischen Blattfeder kann die Öffnung und Schliessung des Stromkreises also besonders einfach, günstig aber dennoch zuverlässig realisiert werden.

Vorteilhaft sind die Blattfeder bzw. der Stromkreis in einem Griff des Behälters angeordnet ist. Auf diese Weise kann eine besonders kompakte Bauweise erreicht werden. Zudem muss die Form des Behälters gegenüber den bekannten Behältern nicht angepasst werden, da alle zusätzlichen Elemente im sonst nicht genutzten Griff "verstaut" werden können.

Gemäss zwei anderen besonders vorteilhaften Ausführungsvarianten der Erfindung ist Identifikationselement ein RFID-Transponder und das Lese- und Kontrollmodul umfasst ein RFID-Lesegerät. Auf diese Weise kann die vor allem in der Logistik-Branche bekannte und gut beherrschte RFID-Technologie zur Identifikation des Behälters verwendet werden. RFID-Transponder können günstig hergestellt werden. Zudem haben sie ein geringes Gewicht und sind auch sehr zuverlässig. Durch die Möglichkeit, verschiedene Daten auf jedem RFID-Transponder abzuspeichern können auch verschiedene Behälter voneinander unterschieden werden. Dies ermöglicht insbesondere, dass für jeden Behälter spezifische Programme und Drehzahlen definiert und bei der Erkennung eines entsprechenden Codes durch das Lese- und Kontrollmodul angewendet werden. Hierzu ist es insbesondere vorteilhaft, wenn die Basis ein Speichermittel umfasst, in welchem Daten derart speicherbar sind, dass sie mit durch das Lese- und Kontrollmodul lesbaren Daten vergleichbar sind.

An dieser Stelle muss nochmals erwähnt werden, dass sich die vorliegende Erfindung neben der erfindungsgemässen Vorrichtung zum Mischen und/oder Pürieren von Speisen auch auf ein entsprechendes Verfahren zum Kontrollieren dieser Vorrichtung bezieht.

So werden in einem erfindungsgemässen Verfahren zum Kontrollieren einer Vorrichtung zum Mischen und/oder Pürieren von Speisen, wenn der Deckel auf den Behälter aufgesetzt wird, die Blattfeder durch den Permanent-Magneten angezogen, der Stromkreis geschlossen, und das Identifikationselement aktiviert, und wenn der Behälter auf die Basis aufgesetzt wird, die auf dem Identifikationselement gespeicherten Daten durch das Lese- und Kontrollmodul gelesen und der Antriebsmotor derart kontrolliert, dass die Vorrichtung in Betrieb genommen werden kann.

Ausserdem kehrt, falls der Deckel vom Behälter entfernt wird, das Schwenkelement wieder in die Ausgangslage zurück, wobei der Stromkreis geöffnet und das Identifikationselement deaktiviert wird, wodurch die auf dem Identifikationselement gespeicherten Daten durch das Lese- und Kontrollmodul nicht gelesen werden, wobei der Antriebsmotor derart kontrolliert wird, dass die Vorrichtung nicht in Betrieb genommen werden kann.

Andererseits werden, falls der Behälter von der Basis entfernt wird, die auf dem Identifikationselement gespeicherten Daten durch das Lese- und Kontrollmodul nicht gelesen, so dass der Antriebsmotor derart kontrolliert wird, dass die Vorrichtung nicht in Betrieb genommen werden kann.

Vorteilhaft können die auf dem Identifikationselement gespeicherten und vom Lese- und Kontrollmodul gelesenen Daten mit gespeicherten Daten verglichen werden, und bei keiner Übereinstimmung der Antriebsmotor derart kontrolliert werden, dass die Vorrichtung nicht in Betrieb genommen werden kann.

Alternativ oder zusätzlich dazu können die auf dem Identifikationselement gespeicherten und vom Lese- und Kontrollmodul gelesenen Daten mit gespeicherten Daten verglichen werden, und der Antriebsmotor derart kontrolliert werden, dass vorgespeicherte Programme bzw. Drehzahlen ausgeführt werden.

### Kurze Beschreibung der Zeichnungen

Die Erfindung ist an Hand mehrerer Ausführungsformen dargestellt worden. Die einzelnen technischen Merkmale einer Ausführungsform können jedoch durchaus auch in Kombination mit einer anderen Ausführungsform mit den dargelegten Vorteilen verwendet werden. Die Beschreibung der erfindungsgemässen technischen Merkmale ist daher nicht auf die jeweilige Ausführungsform beschränkt.

Eine vorteilhafte Ausführungsform der Erfindung wird im Folgenden anhand der Zeichnungen dargestellt, die lediglich zur Erläuterung dienen und nicht einschränkend auszulegen sind. Aus den Zeichnungen offenbar werdende Merkmale der Erfindung sollen als zur Offenbarung der Erfindung gehörend betrachtet werden. In den Zeichnungen zeigen:
- Fig. 1: eine Frontalansicht einer erfindungsgemässen Vorrichtung zum Mischen und/oder Pürieren von Speisen,
- Fig. 2: einen vereinfachten Längsschnitt durch die Vorrichtung aus Figur 1 in einer betriebsbereiten Position,
- Fig. 2A: einen vergrösserten Ausschnitt aus Figur 2 mit des obersten Abschnitts des Griffs der Vorrichtung,
- Fig. 3: einen vereinfachten Längsschnitt durch die Vorrichtung aus Figur 1 in einer nicht betriebsbereiten Position, und
- Fig. 3A: einen vergrösserten Ausschnitt aus Figur 3 mit des obersten Abschnitts des Griffs der Vorrichtung.

### Detaillierte Beschreibung der bevorzugten Ausführungsform

In Figur 1 ist eine Vorrichtung 10 zum Mischen und/oder Pürieren von Speisen gemäss einer bevorzugten Ausführungsform der vorliegenden Erfindung illustriert. Diese Vorrichtung 10 umfasst, wie dies auch bei ähnlichen Vorrichtungen der Fall ist, eine Basis 30 und einen darauf aufgesetzten Behälter 20, in welchen die zu mischenden bzw. zu pürierenden Speisen eingeführt werden, bevor die Vorrichtung 10 in Betrieb genommen wird. Die Vorrichtung 10 umfasst, im Wesentlichen an der Basis 30, Bedienungs- und/oder Anzeigeelemente (z.B. Schalter, Knöpfe, Displays, etc.), welche der Einfachheit halber nicht dargestellt sind.

An dieser Stelle soll angemerkt werden, dass der Begriff "Speisen" nicht einschränkend ausgelegt werden soll. Insbesondere können in einer erfindungsgemässen Vorrichtung 10 Früchte und Gemüse gemischt und/oder püriert werden, aber es ist selbstverständlich durchaus auch möglich, andere feste Lebensmittel wie zum Beispiel Fleisch oder Zerealien, oder Flüssigkeiten wie zum Beispiel Wasser, Essig oder Öl zu verwenden. Ausserdem kann die erfindungsgemässe Vorrichtung 10 theoretisch ohne weiteres auch mit nicht essbaren Gegenständen verwendet werden, beispielsweise um Holz oder Kunststoff zu zerhacken. Es soll daher für die Zwecke dieser Anmeldung angenommen werden, dass alle diese und andere geeignete Gegenstände unter den allgemeinen Begriff "Speisen" fallen.

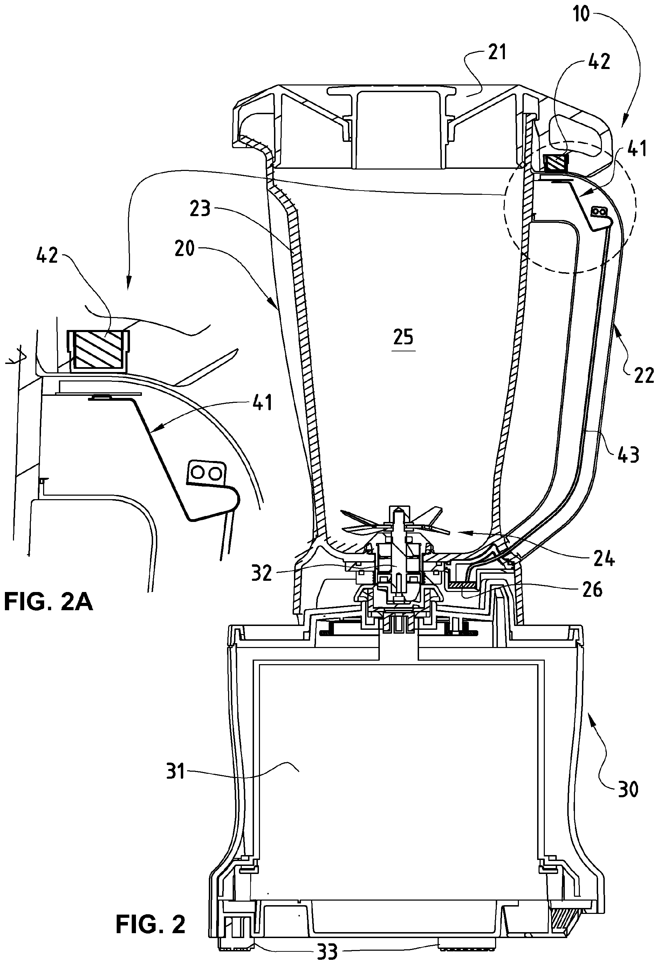

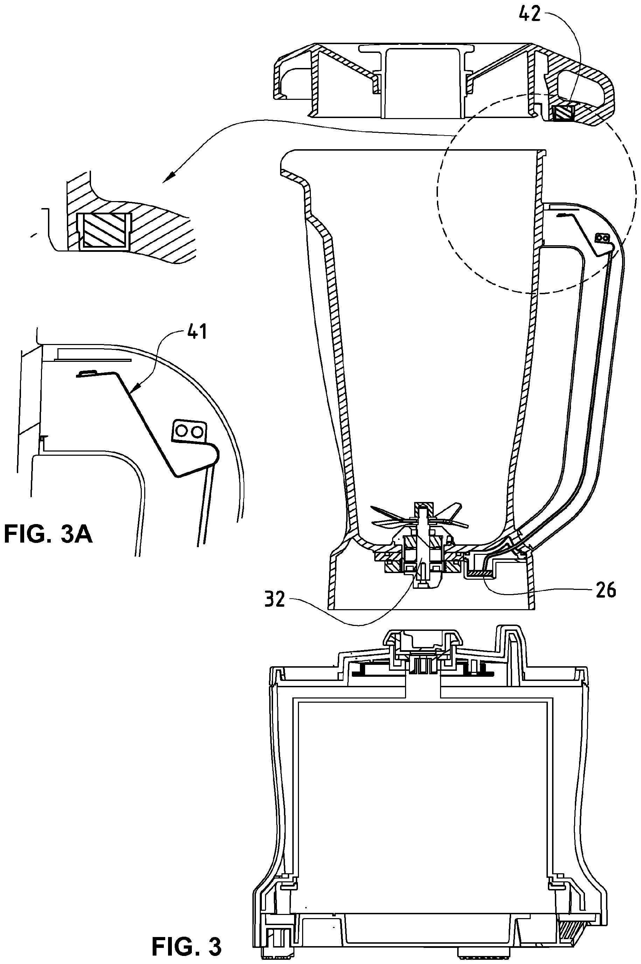

In Figuren 2 und 3 ist die erfindungsgemässe Vorrichtung zum Mischen und/oder Pürieren aus Figur 1 jeweils in einem Längsschnitt dargestellt, in welchen die innere Struktur der Vorrichtung 10 besser sichtbar ist.

Der Behälter 20 besteht aus einer Wand 23, welche beispielsweise aus Kunststoff, Metall oder Glas hergestellt werden kann. Auf den Behälter 20 kann ein Deckel 21 aufgesetzt (wie in Figur 2) und von diesem wieder entfernt (wie in Figur 3) werden. Der Behälter 20 umfasst zudem einen Griff 22, an welchem der Behälter 20 durch einen Benutzer gehalten werden kann, beispielsweise um die pürierten Speisen nach dem Betrieb aus dem Behälter 20 in ein Glass auszugiessen. Der Deckel 21 und der Griff 22 umfassen Elemente, welche für die vorliegende Erfindung relevant sind, und welche später detaillierter beschrieben werden.

Im unteren Bereich eines Innenraums 25 des Behälters 20 befindet sich ein Messerstern 24, welcher durch einen Antriebsmotor 31 (nur schematisch illustriert) über eine Kupplung 32 in Drehung versetzt werden kann. Die Basis 30, und somit die gesamte Vorrichtung 10, weisen einen oder mehrere eventuell höhenverstellbare Füsse 33 auf, mittels welcher diese auf einer Arbeitsunterlage positioniert werden können.

Somit stimmt der grundsätzliche Aufbau der erfindungsgemässen Vorrichtung 10 im Wesentlichen mit dem Aufbau von ähnlichen vorbekannten Vorrichtungen überein. Ausserdem stimmt auch die grundsätzliche Funktionsweise dieser erfindungsgemässen Vorrichtung 10 im Prinzip mit der Funktionsweise von ähnlichen vorbekannten Vorrichtungen überein, so dass diese hier nicht näher beschrieben wird.

Wichtig zu betonen ist an dieser Stelle, dass die Basis 30 der erfindungsgemässen Vorrichtung zum Mischen und/oder Pürieren von Speisen 10 grundsätzlich auch mit verschiedenen Behältern 20 verwendet werden kann. Beispielsweise können Behälter 20 mit unterschiedlichem Volumen zur Verfügung gestellt werden. Ebenfalls sind Behälter 20 aus verschiedenen Materialien, oder auch Behälter 20 mit verschiedenen Messern für die Benutzung mit verschiedenen Speisen denkbar. In einem solchen Fall können auch mehrere Deckel 21 vorgesehen werden, welche jeweils mit einem entsprechenden Behälter 20 verwendet werden können. Es wäre aber auch möglich, einen einzigen Deckel 21 mit verschiedenen Behältern 20 zu benutzen.

Unabhängig von diesen verschiedenen Optionen ist das besondere an der erfindungsgemässen Vorrichtung zum Mischen und/oder Pürieren von Speisen 10, dass es Elemente aufweist, dank welchen die Verletzungsgefahr durch unwillentliches Berühren der rotierenden Messer auf eine einfache und zuverlässige Weise minimiert werden kann.

Zu diesem Zweck umfasst der Deckel einen Permanent-Magneten 42. Dieser Permanent-Magnet 42 ist so angeordnet, dass er bei korrekt aufgesetztem Deckel 21 in der Nähe des Griffs 22 des Behälters 20 befindet. Der Griff 22 des Behälters 20 umfasst seinerseits eine metallene Blattfeder, und einen Stromkreis 43 (schematisch illustriert). Sobald nun der Deckel 21 korrekt auf den Behälter 20 aufgesetzt wird, wird die im oberen Abschnitt des Griffs 22, in der Nähe des Deckels 21 liegende Blattfeder 41 vom Permanent-Magneten 42 im Deckel 21 angezogen. Der Stromkreis 43 im Griff 22 wird somit geschlossen, wie in Figuren 2 und 2A gut sichtbar ist. Wenn der Deckel 21 jedoch vom Behälter 20 weggenommen wird, kann die Blattfeder 41 nicht mehr vom Permanent-Magneten 42 angezogen werden und somit fällt diese Blattfeder 41 wieder in die Ausgangslage zurück, in welcher der Stromkreis 43 nicht mehr geschlossen ist. Diese Position der Blattfeder 41 ist in Figuren 3 und 3A dargestellt.

Neben dem Permanent-Magneten 42 im Deckel 21 und der Blattfeder 41 im Griff 22 des Behälters 20 umfasst der Behälter 20 auch ein Identifikationselement 26, beispielsweise einen RFID-Transponder. Zudem umfasst die Basis 30 der Vorrichtung 10 ein Lese- und Kontrollmodul (nicht illustriert), beispielsweise ein RFID-Lesegerät mit einer entsprechenden Steuerung des Antriebsmotors 31. Es soll an dieser Stelle betont werden, dass die genaue Ausgestaltung dieses Lese- und Kontrollmoduls für einen Fachmann ohne weiteres nachvollziehbar ist, sowie dass es verschiedene Möglichkeiten gibt, dieses Modul zu implementieren. Insbesondere können die Funktionalität des Lesens der Daten aus dem Identifikationselement des Behälters 20 von der Kontrollfunktion des Antriebsmotors 31 durch zwei getrennte physische Elemente realisiert werden.

Die RFID-Technologie (vom Englischen "Radio Frequency Identification" bzw. Identifizierung mit Hilfe elektromagnetischer Wellen) ist eine Identifikationstechnologie, welche vor allem im Logistik-Bereich seit einiger Zeit eine wichtige Rolle spielt. Dabei können die auf einem so genannten RFID-Transponder gespeicherten Daten über eine drahtlose Funkverbindung von einem Lesegerät ausgelesen werden. Die RFID-Transponder umfassen dabei meistens keine eigene Energiequelle und kriegen die zur Datenübermittlung benötigte Energie ebenfalls drahtlos vom Lesegerät. Diese Energieübermittlung ist jedoch nur auf kurze Distanzen beschränkt, so dass die Datenübermittlung zu einem Lesegerät nur funktioniert, wenn sich der RFID-Transponder und das RFID-Lesegerät in der Nähe voneinander befinden. Die verschiedenen technischen Details über die RFID-Technologie sind einem Fachmann gut bekannt, können jedoch beispielsweise unter https://de.wikipedia.org/wiki/RFID nachgelesen werden, so dass sich eine detaillierte Beschreibung dieser Technologie erübrigt.

Nachdem wie oben beschrieben der Stromkreis 43 im Griff 22 des Behälters 20 geschlossen wird, wird der RFID-Transponder 26 aktiviert. Wenn nun der Behälter 20 korrekt auf die Basis 30 aufgesetzt wird, empfängt die Antenne des RFID-Transponders 26 Energie vom Lese- und Kontrollmodul aus der Basis 30, wodurch Daten vom RFID-Transponder 26 an dieses Lese- und Kontrollmodul übermittelt werden können. Durch den vom RFID-Transponder 26 verwendeten Signal-Code kann das RFID-Lesegerät in der Basis 30 erkennen, ob einerseits der Deckel 21 richtig geschlossen ist, und ob andererseits der Behälter 20 korrekt auf der Basis 30 aufgesetzt ist. Es ist zudem insbesondere möglich, die Identifizierung von verschiedenen Behältern 20 durch eine unterschiedliche Codierung des RFID-Transponders 26 zu erlauben. Ist also der Behälter 20 mit dem Deckel 21 korrekt auf der Basis 30 aufgesetzt, kann das Lese- und Kontrollmodul die Art des Behälters 20 und die korrekte Position erkennen. Dieses Lese- und Kontrollmodul in der Basis 30 kann also in diesem Fall den Antriebsmotor 31 "freigeben", so dass die Vorrichtung 10 durch den Benutzer in Betrieb genommen werden kann.

Wenn dann, bei einem auf der Basis 30 korrekt aufgesetzten Behälter 20 beispielsweise der Deckel 21 weggenommen wird, wird der Stromkreis 43 im Griff 22 des Behälters 20 wie oben beschrieben unterbrochen. Der RFID-Transponder 26 wird folglich deaktiviert und das RFID-Lesegerät kann danach diese Deaktivierung erkennen. Dadurch kann die Freigabe des Antriebsmotors 31 durch das Lese- und Kontrollmodul wieder aufgehoben werden, wodurch die Vorrichtung 10 automatisch abgestellt werden kann. Entsprechendes passiert beim Entfernen des gesamten Behälters 20 von der Basis 30: In diesem Fall entfernt sich auch der RFID-Transponder 26 aus dem Lesebereich des RFID-Lesegeräts, was ebenfalls ein Abstellen des Betriebs der Vorrichtung 10 durch das Lese- und Kontrollmodul an sich zieht.

Zum Schluss sei nochmals darauf hingewiesen, dass die hier beispielhaft beschriebenen Ausführungsvarianten nur eine Auswahl an möglichen Realisierungen der erfindungsgemässen Ideen darstellen und keinesfalls als limitierend angesehen werden sollen. Der Fachmann wird verstehen, dass noch andere Implementierungen der Erfindung und weitere Elemente möglich sind, ohne dass die wesentlichen Merkmale der Erfindung vernachlässigt werden. Insbesondere kann der RFID-Transponder 26 im Behälter 20 auch durch eine Energiequelle (beispielsweise im Griff 22) versorgt werden, wobei das Schliessen des Stromkreises 43 automatisch eine aktive Aussendung von Daten aus diesem Transponder bewirkt, während diese Aussendung von Daten beim Öffnen des Stromkreises 43 unterbrochen wird, was dann auch das Abstellen der Vorrichtung 10 an sich zieht. Ausserdem ist es möglich, die RFID-Technologie durch andere drahtlose Identifikationstechnologien zu ersetzen, beispielsweise NFC (Near Field Communication), WiFi, Bluetooth, ZigBee, etc.

## Patentansprüche

1. Vorrichtung (10) zum Mischen und/oder Pürieren von Speisen umfassend einen Behälter (20) für die zu mischenden und/oder pürierenden Speisen mit einem Deckel (21), sowie eine Basis (30), welche einen Antriebsmotor (31) umfasst, und auf welche der Behälter (20) aufsetzbar ist,
**dadurch gekennzeichnet,**
**dass** der Deckel (21) einen Permanent-Magneten (42) und der Behälter (20) eine Blattfeder (41) umfassen, wobei die Blattfeder (41) durch den Permanent-Magneten (42) derart anziehbar ist, dass ein im Behälter (20) integrierter Stromkreis (43) schliessbar ist,
**dass** der Behälter (20) ein Identifikationselement (26) mit darauf speicherbaren Daten und die Basis (30) ein Lese- und Kontrollmodul umfassen, wobei das Identifikationselement (26) über den Stromkreis (43) aktivierbar ist, und wobei die auf dem Identifikationselement (26) speicherbaren Daten durch das Lese- und Kontrollmodul lesbar und der Antriebsmotor (31) kontrollierbar sind.

2. Vorrichtung gemäss Anspruch 1, **dadurch gekennzeichnet, dass** die Blattfeder (41) in einem Griff (22) des Behälters (20) angeordnet ist.

3. Vorrichtung gemäss Anspruch 2, **dadurch gekennzeichnet, dass** der Stromkreis (43) im Griff (22) des Behälters (20) angeordnet ist.

4. Vorrichtung gemäss einem der Ansprüche 1 bis 3, **dadurch gekennzeichnet, dass** das Identifikationselement (26) ein RFID-Transponder ist.

5. Vorrichtung gemäss einem der Ansprüche 1 bis 4, **dadurch gekennzeichnet, dass** das Lese- und Kontrollmodul ein RFID-Lesegerät umfasst.

6. Vorrichtung gemäss einem der Ansprüche 1 bis 5, **dadurch gekennzeichnet, dass** die Basis (30) ein Speichermittel umfasst, in welchem Daten derart speicherbar sind, dass sie mit durch das Lese- und Kontrollmodul lesbaren Daten vergleichbar sind.

7. Verfahren zum Kontrollieren einer Vorrichtung zum Mischen und/- oder Pürieren von Speisen gemäss einem der Ansprüche 1 bis 6,
**dadurch gekennzeichnet,**
**dass** der Deckel (21) auf den Behälter (20) aufgesetzt wird, wodurch die Blattfeder (41) durch den Permanent-Magneten (42) angezogen wird, dass der Stromkreis (43) geschlossen wird, und dass das Identifikationselement (26) aktiviert wird,
**dass** der Behälter (20) auf die Basis (30) aufgesetzt wird, wodurch die auf dem Identifikationselement (26) gespeicherten Daten durch das Lese- und Kontrollmodul gelesen und der Antriebsmotor (31) derart kontrolliert wird, dass die Vorrichtung (10) in Betrieb genommen werden kann.

8. Verfahren nach Anspruch 7, **dadurch gekennzeichnet, dass** falls der Deckel (21) vom Behälter (20) entfernt wird, die Blattfeder (41) wieder in die Ausgangslage zurückkehrt, wobei der Stromkreis (43) geöffnet und das Identifikationselement (26) deaktiviert wird, wodurch die auf dem Identifikationselement (26) gespeicherten Daten durch das Lese- und Kontrollmodul nicht gelesen werden, wobei der Antriebsmotor (31) derart kontrolliert wird, dass die Vorrichtung (10) nicht in Betrieb genommen werden kann.

9. Verfahren nach Anspruch 7 oder 8, **dadurch gekennzeichnet, dass** falls der Behälter (20) von der Basis (30) entfernt wird, die auf dem Identifikationselement (26) gespeicherten Daten durch das Lese- und Kontrollmodul nicht gelesen werden, so dass der Antriebsmotor (31) derart kontrolliert wird, dass die Vorrichtung (10) nicht in Betrieb genommen werden kann.

10. Verfahren nach einem der Ansprüche 7 bis 9, **dadurch gekennzeichnet, dass** die auf dem Identifikationselement (26) gespeicherten und vom Lese- und Kontrollmodul gelesenen Daten mit gespeicherten Daten verglichen werden, und bei keiner Übereinstimmung der Antriebsmotor (31) derart kontrolliert wird, dass die Vorrichtung (10) nicht in Betrieb genommen werden kann.

11. Verfahren nach einem der Ansprüche 7 bis 10, **dadurch gekennzeichnet, dass** die auf dem Identifikationselement (26) gespeicherten und vom Lese- und Kontrollmodul gelesenen Daten mit gespeicherten Daten verglichen werden, und der Antriebsmotor (31) derart kontrolliert wird, dass vorgespeicherte Programme bzw. Drehzahlen ausgeführt werden.

## Claims

1. Device (10) for mixing and/or pureeing food comprising a container (20) for the food to be mixed and/or pureed with a lid (21), as well as a base (30), which comprises a drive motor (31), and on which the container (20) is placeable,
**characterized in**
**that** the lid (21) comprises a permanent magnet (42) and the container (20) comprises a leaf spring (41), whereby the leaf spring (41) is able to be attracted by the permanent magnet (42) in such a way that a circuit (43) integrated in the container (20) is closable,
**that** the container (20) comprises an identification element (26) with data storable thereon and the base (30) comprises a reading and control module, whereby the identification element (26) is able to be activated via the circuit (43), and whereby the data storable on the identification element (26) are readable by the reading and control module and the drive motor (31) is controllable.

2. Device according to claim 1, **characterized in that** the leaf spring (41) is arranged in a handle (22) of the container (20).

3. Device according to claim 2, **characterized in that** the circuit (43) is arranged in the handle (22) of the container (20).

4. Device according to one of the claims 1 to 3, **characterized in that** the identification element (26) is an RFID transponder.

5. Device according to one of the claims 1 to 4, **characterized in that** the reading and control module comprises an RFID reader.

6. Device according to one of the claims 1 to 5, **characterized in that** the base (30) comprises a storage means, in which data are able to be stored in such a way that they are comparable with data readable by the reading and control module.

7. Method for controlling a device for mixing and/or pureeing food according to one of the claims 1 to 6,
**characterized in**
**that** that the lid (21) is placed on the container (20), whereby the leaf spring (41) is attracted by the permanent magnet (42), that the circuit (43) is closed, and that the identification element (26) is activated,
**that** the container (20) is placed on the base (30), whereby the data stored on the identification element (26) are read by the reading and control module and the drive motor (31) is controlled in such a way that the device (10) is able to be put into operation.

8. Method according to claim 7, **characterized in that** if the lid (21) is removed from the container (20), the leaf spring (41) returns to its original position, whereby the circuit (43) is opened and the identification element (26) is deactivated, whereby the data stored on the identification element (26) are not read by the reading and control module, whereby the drive motor (31) is controlled in such a way that the device (10) is not able to be put into operation.

9. Method according to claim 7 or 8, **characterized in that** if the container (20) is removed from the base (30), the data stored on the identification element (26) are not read by the reading and control module, so that the drive motor (31) is controlled in such a way that the device (10) is not able to be put into operation.

10. Method according to one of the claims 7 to 9, **characterized in that** the data stored on the identification element (26) and read by the reading and control module are compared with stored data, and in the case of no match, the drive motor (31) is controlled in such a way that the device (10) is not able to be put into operation.

11. Method according to one of the claims 7 to 10, **characterized in that** the data stored on the identification element (26) and read by the reading and control module are compared with stored data, and the drive motor (31) is controlled in such a way that pre-stored programs or respectively speeds are executed.

## Revendications

1. Dispositif (10) destiné à mélanger et/ou à réduire en purée de la nourriture comprenant un récipient (20) pour la nourriture à mélanger et/ou à réduire en purée muni d'un couvercle (21), ainsi qu'une base (30), qui comprend un moteur d'entraînement (31), et sur lequel le récipient (20) peut être monté,
**caractérisé en ce**
**que** le couvercle (21) comprend un aimant permanent (42) et le récipient (20) comprend un ressort à lame (41), lequel ressort à lame (41) peut être attiré par l'aimant permanent (42) de telle sorte qu'un circuit (43) intégré dans le récipient (20) puisse être fermé,
**que** le récipient (20) comprend un élément d'identification (26) dans lequel sont stockées des données et la base (30) comprend un module de lecture et de contrôle, l'élément d'identification (26) pouvant être activé via le circuit (43), les données stockées sur l'élément d'identification (26) pouvant être lues par le module de lecture et de contrôle, et le moteur d'entraînement (31) pouvant être contrôlé.

2. Dispositif selon la revendication 1, **caractérisé en ce que** le ressort à lame (41) est agencé dans une poignée (22) du récipient (20).

3. Dispositif selon la revendication 2, **caractérisé en ce que** le circuit (43) est agencé dans la poignée (22) du récipient (20).

4. Dispositif selon l'une des revendications 1 à 3, **caractérisé en ce que** l'élément d'identification (26) est un transpondeur RFID.

5. Dispositif selon l'une des revendications 1 à 4, **caractérisé en ce que** le module de lecture et de contrôle comprend un lecteur RFID.

6. Dispositif selon l'une des revendications 1 à 5, **caractérisé en ce que** la base (30) comprend un moyen de stockage, dans lequel des données peuvent être sauvegardées de manière à ce qu'elles puissent être comparées aux données lisibles par le module de lecture et de contrôle.

7. Procédé de contrôle d'un dispositif pour mélanger et/ou réduire en purée de la nourriture selon l'une des revendications 1 à 6,
**caractérisé en ce**
**que** le couvercle (21) est monté sur le récipient (20), le ressort à lame étant attiré par l'aimant permanent (42), que le circuit (43) est fermé, et que l'élément d'identification (26) est activé,
**que** le récipient (20) est placé sur la base (30), les données sauvegardées sur l'élément d'identification (26) sont lues par le module de lecture et de contrôle et le moteur d'entraînement (31) est contrôlé de sorte que le dispositif (10) peut être mis en œuvre.

8. Procédé selon la revendication 7, **caractérisé en ce que** le couvercle (21) est retiré du récipient (20), le ressort à lame (41) revient dans sa position de repos initiale, le circuit (43) étant ouvert et l'élément d'identification (26) étant désactivé, les données sauvegardées sur l'élément d'identification (26) ne sont pas lues par le module de lecture et de contrôle, le moteur d'entraînement (31) étant contrôlé de telle sorte que le dispositif (10) ne puisse pas être mis en œuvre.

9. Procédé selon la revendication 7 ou 8, **caractérisé en ce que** si le récipient (20) est retiré de la base (30), les données sauvegardées sur l'élément d'identification (26) ne sont pas lues par le module de lecture et de contrôle, de telle sorte que le moteur d'entraînement (31) est contrôlé de manière à ce que le dispositif (10) ne peut pas être mis en œuvre.

10. Procédé selon l'une des revendications 7 à 9, **caractérisé en ce que** les données sauvegardées sur l'élément d'identification (26) et lues par le module de lecture et de contrôle sont comparées à des données stockées, et dans le cas d'une absence de correspondance, le moteur d'entraînement (31) est contrôlé de telle sorte que le dispositif (10) ne puisse pas être mis en œuvre.

11. Procédé selon l'une des revendications 7 à 9, **caractérisé en ce que** les données sauvegardées sur l'élément d'identification (26) et lues par le module de lecture et de contrôle sont comparées à des données stockées, et le moteur d'entraînement (31) est contrôlé de manière à ce que les programmes pré-stockés ou respectivement les vitesses de fonctionnement soient exécutés.
